# EUROPEAN PATENT APPLICATION

(11) **EP 4 349 895 A1**
(43) Date of publication of application: **10.04.2024**
(21) Application number: 22199325.6
(22) Date of filing: 03.10.2022
(51) Int. Cl.: C08J 11/14, C08J 11/26

(54) **METHOD FOR RECYCLING A POLYAMIDE WITH A MOLECULAR WEIGHT REDUCTION PRETREATMENT**

(71) Applicant: Solvay Specialty Polymers USA, LLC, Alpharetta, Georgia 30005-3914 (US)
(72) Inventor: TOURAUD, Franck, Saint-Fons (FR); JEOL, Stéphane, Saint-Fons (FR); BRANHAM, Kelly, D., Alpharetta (US); SERVEL, Clement, Saint-Fons (FR)
(74) Representative: Senninger, Thierry

(57) **Abstract**

The invention relates to a method of recovery of the monomers from a polyamide (PA) of the AABB type comprises the following steps:
- a) a product (P) comprising a polymer component comprising the polyamide (PA) is put into contact with a compound (A*) in order to reduce the molecular weight of the polyamide (PA), wherein the polymer component is in the molten form and the compound (A*) is selected in the group of C₂-C₁₈ carboxylic acids;
- b) the mixture obtained at the end of step a) is optionally treated so as to remove from the molten mixture at least one solid material;
- c) the hydrolysis of the molecules of polyamide(s) present in the mixture obtained at the end of step a) or optional step b), is performed in an aqueous medium either (i) by an acidic or basic hydrolysis involving an acid (Ac) or a base (Ba) and performed at a pH respectively lower than 6.0 or higher than 8.0 or (ii) by an enzymatic hydrolysis;
- d) a stream (S) comprising the diacid (A), the diamine (B) and compound (A*), each of these three compounds being either in their free form or in the form of a salt, is recovered at the end of step c) and is further processed in order to separate and recover the diacid (A), the diamine (B) and compound (A*).

## Description

The present disclosure relates to a method for recycling a polyamide that comprises a molecular weight reduction pretreatment and involves depolymerizing the polyamide into its constitutive monomers.

### Context of the invention

Plastics are inexpensive and durable materials, which can be used to manufacture a variety of products that find use in a wide range of applications, so that the production of plastics has increased dramatically over the years since their discovery. It is estimated that about 40% of these plastics are used for single-use disposable applications, such as packaging, agricultural films, disposable consumer items or for short-lived products that are discarded within a year of manufacture. Because of the durability of the polymers involved, substantial quantities of plastics are piling up in landfill sites and in natural habitats worldwide, generating increasing environmental problems. Even degradable and biodegradable plastics may persist for decades depending on local environmental factors, like levels of ultraviolet light exposure, temperature, presence of suitable microorganisms, etc.

One solution to reduce environmental and economic impacts correlated to the accumulation of plastic is closed-loop recycling wherein plastic material is mechanically reprocessed to manufacture new products. For example, one of the most common closed-loop recycling is the polyethylene terephthalate (PET) recycling. PET wastes are subjected to successive treatments leading to a food-contact-approved recycled PET, which is collected, sorted, pressed into bales, crushed, washed, chopped into flakes, melted and extruded in pellets and offered for sale. Then, these recycled PET may be used to create fabrics for the clothing industry or new packaging such as bottles or blister packs, etc.

However, plastic wastes are generally collected all together, so that plastic bales contain a mixture of different plastics, the composition of which may vary from source to source, and the proportions of which may vary from bale to bale. Consequently, recycling processes require preliminary selection to sort out the plastic products according to their composition, size, resin type, colour, functional additives used, etc.

Another potential process for recycling plastics consists of chemical recycling allowing recovering the monomers of the polymer. The resulting monomers may then be used to re-manufacture plastic materials (the same or other plastic materials) or to make other synthetic chemicals. While this chemical and enzymatic depolymerization process has been well optimized over the years for PET with very high yield of recycled ethylene glycol and recycled terephthalic acid, there is still need to develop similarly an efficient and optimized process for polyamides.

### Background art

WO 2022/058291 discloses an improved process for the acid hydrolysis of polylaurolactam with sulfuric acid at a temperature between 125 and 190°C, preferably at a temperature higher than 160°C. The weight ratio of H₂SO₄ / polyamide used is preferably 1:0.1 to 1:1.

US 5,668,277 discloses the depolymerization of nylon 6 or a mixture of nylons through the reaction with a nitrogen-containing compound such as ammonia or an amine. The reaction can be performed in the molten form. The method disclosed is different from the method of claim 1.

US 4,620,032 discloses a process for the depolymerization of a condensation polymer such as a polyester or a polyamide comprising the following steps: (a) intimately admixing molten condensation polymer selected from the group consisting of polyamides and polyesters with a depolymerization agent selected from the group consisting of (i) a product resulting from the complete hydrolytic depolymerization of said condensation polymer in liquid form, and (ii) water (b) admixing said molten condensation polymer and said depolymerization agent for a time sufficient that the molecular weight of said condensation polymer is reduced by at least 50%; and (c) subjecting said treated condensation polymer to neutral hydrolysis with a substantial excess of water based on the weight of the condensation polymer, to thereby effect substantially complete hydrolytic depolymerization of said condensation polymer.

CN 114163622 relates to the technical field of semi-aromatic polyamide waste recycling and discloses a process of depolymerization of a semi-aromatic polyamide by an alcoholysis reaction with 1,4-butanediol and a catalyzer. The method disclosed is different from the method of claim 1.

### Technical problem to be solved

The depolymerization of polyamides of the AABB type (AABB-polyamides are prepared by the reaction of diamines and a diacids) is well documented and may be performed under different conditions.

There is a need for an efficient and easy to implement method of recovery of the monomers from a product based on a polyamide of the AABB type, notably from a product further comprising fillers. In order to address the scarcity of water, the method should also be environmentally-friendly with the use of a limited amount of water.

The method of the invention aims at solving this technical problem.

### Brief disclosure of the invention

The method of the invention is disclosed in one of the claims 1-17.

More precisions and details about the claimed subject-matters are now provided below.

### General definitions

wt.% is a percentage by weight.

When numerical ranges are indicated, range ends are included.

### Disclosure of the invention

The invention relates to a method of recovery of the monomers from a polyamide (PA), notably of the AABB type, comprising the following steps:
- a) a product (P) comprising a polymer component comprising the polyamide (PA) is put into contact with a compound (A*) in order to reduce the molecular weight of the polyamide (PA), wherein the polymer component is in the molten form and the compound (A*) is selected in the group of C₂-C₁₈ carboxylic acids;
- b) the mixture obtained at the end of step a) is optionally treated so as to remove from the molten mixture at least one solid material;
- c) the hydrolysis of the molecules of polyamide(s) present in the mixture obtained at the end of step a) or optional step b), is performed in an aqueous medium either (i) by an acidic or basic hydrolysis involving an acid (Ac) or a base (Ba) and performed at a pH respectively lower than 6.0 or higher than 8.0 or (ii) by an enzymatic hydrolysis;
- d) a stream (S) comprising the diacid (A), the diamine (B) and compound (A*), each of these three compounds being either in their free form or in the form of a salt, is recovered at the end of step c) and is further processed in order to separate and recover the diacid (A), the diamine (B) and compound (A*).

### Product (P)

The product (P) comprises a polymer component which comprises at least one polyamide (PA) of the AABB type. A polyamide of the AABB types results from the polycondensation of at least one diamine and at least one diacid.

The polyamide (PA) may notably be prepared by polycondensation of:
- at least one diacid (A) selected in the group of C₂-C₁₈ aliphatic diacids, isophthalic acid and terephthalic acid; and
- at least one diamine (B) selected in the group consisting of C₂-C₁₈ aliphatic diamines, C₄-C₁₈ cycloaliphatic diamines and C₈-C₁₈ arylaliphatic diamines.

The diacid (A) may be an aliphatic diacid represented by general formula (I) HOOC-Alk-COOH, wherein Alk is a C₁-C₁₆ linear or branched alkylene group. Alk is generally a C₁-C₁₆ linear alkylene group. For instance, the aliphatic diacid (A) may be adipic acid, azelaic acid or sebacic acid.

The diamine (B) may be an aliphatic diamine represented by the general formula (II) H₂N-Alk-NH₂, wherein Alk is a C₂-C₁₈ linear or branched alkylene group. For instance, the aliphatic diamine may be hexamethylene diamine, 2,2,4-trimethyl-1,6-hexanediamine, 2,4,4-trimethyl-1,6-hexanediamine, 2-methyl-1,5-diaminopentane, 1,5-diaminopentane or 1,9-diamino-nonane.

The diamine (B) may also be a cycloaliphatic diamine. A cycloaliphatic diamine is a diamine comprising at least one cycloaliphatic group between the two NH₂. The cycloaliphatic diamine may more particularly be selected in group consisting of isophorone diamine, norbornane diamine, 1,3-bis(aminomethyl)cyclohexane (1,3-BAC), 1,4-bis(aminomethyl)cyclohexane (1,4-BAC) and the diamines of formula (III) : 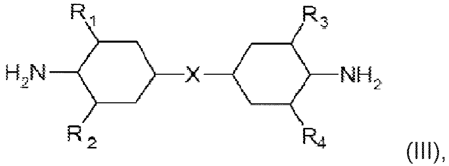 wherein R₁, R₂, R₃ and R₄ are independently selected in the group of H and C₁-C₆ alkyl groups and X is a C₁-C₁₀ alkylene groups. In formula (III), X is more particularly a methylene group. In formula (III), R₁, R₂, R₃ and R₄ are more particularly independently selected in the group consisting of H and CH₃.

The cycloaliphatic diamine may more particularly be selected in group consisting of isophorone diamine, norbornane diamine, 1,3-BAC, 1,4-BAC, para-bis(aminocyclohexyl)-methane (PACM) and bis-(3-methyl-4-aminocyclohexyl)-methane (MACM).

The diamine (B) may be a diamine of formula (IV): 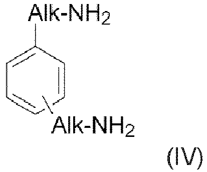 wherein Alk is a C₁-C₆ linear or branched alkylene group. The diamine of formula (IV) may be for instance m-xylylene diamine (MXDA) or p-xylylene diamine (PXDA).

Polyamide (PA) may be a semi-crystalline polyamide.

The polyamide (PA) may more particularly be selected in the group consisting of polyamide 6.6, polyamide 6.9, polyamide 6.10, polyamide 6.12, polyamide 10.10, polyamide 5.10, polyamides 5.6, polyamide 5.9, polyamide 4.6, polyamide 4.9, polyamide 4.10, polyamide 12.12, polyamide 10.12, polyamide MXD6, polyamide MXD6/PXD6, polyamide MXD6/MXDI, polyamide 6T/66, polyamide 6T/6I/66, PA 6T/6I and mixtures thereof *(note: MXD designates a structural unit with MXDA (m-xylylenediamine)* as *the diamine; PXD designates a structural unit with PXDA (p-xylylenediamine) as the diamine; I designates designates a structural unit with isophthalic acid* as *the diacid; T designates designates a structural unit with terephtahalic acid* as *the diacid).*

The polyamide (PA) may more particularly be a polyamide 6.6, a polyamide 6.10 or MXD6.

The polymer component may also comprise another polymer that is not a polyamide (PA) of the AABB type as defined above. This polymer may be either blended with the polyamide (PA) and/or physically present with polyamide (PA) in product (P) but not blended. Preferably, the other polymer is not a polyamide. For instance, the other polymer can be a polyester such as polyethylene terephthalate, polytrimethylene terephthalate, polybutylene terephthalate, polycyclohexylenedimethylene terephthalate; a polyolefin such as polyethylene or polypropylene; a polyphenylenether.

Product (P) usually also comprises at least one polymer additive (Add). The polymer additive (Add) may be selected in the group consisting of fillers, colorants, dyes, pigments, lubricants, plasticizers, flame retardants, nucleating agents, heat stabilizers, UV stabilizers, elastomers, core-shell particles, adhesives, antioxidants and processing aids. The polymer additive (Add) may more particularly be selected in the group consisting of fillers, colorants, dyes, pigments, lubricants, elastomers and heat stabilizers.

Product (P) to be treated may be in various forms. Indeed, product (P) may for instance be in the form of pellets, powders, films, flakes, molded or extruded or 3D printed parts, tubes, filaments, yarns, textiles, fabrics or under any type of geometry. More particularly, product (P) may be in the form of a film comprising at least one layer comprising or made of the polyamide (PA). Product (P) may more particularly be in the form of a multilayer film comprising at least one layer comprising or made of the polyamide (PA). For example, product (P) may be in the form of a multilayer film comprising a layer comprising or made of the polyamide (PA), notably MXD6, in between two layers comprising polyethylene terephthalate (PET).

Product (P) is conveniently in the form of particles with a size lower than 10.0 mm, preferably lower than 5.0 mm, even preferably lower than 3.0 mm.

The proportion of polyamide (PA) in product (P) is generally at least 30.0 wt.%, more particularly at least 40.0 wt.%. This proportion may be at least 50.0 wt.% or even at least 60.0 wt.%. This proportion may be 100 wt.% if product (P) consists of polyamide (PA). Yet, this situation is rare as the method of the invention is meant to apply to products of our day-to-day life for which polymer additives are usually present in combination with the polyamide (PA). The proportion of polyamide (PA) in product (P) is generally less than 99.9 wt.%, more particularly less than 99.5 wt.%.

The number average molecular weight Mn of the polyamide (PA) is generally between 500 and 50,000 g/mol, preferably between 7,000 and 35,000 g/mol, even more preferably between 10,000 g/mol and 20,000 g/mol. Mn is determined by the equation Mn=2,000,000/[EG], with [EG] being the concentration in meq/kg of the end-groups of the polyamide (PA). The usual end-groups in polyamides are -NH₂ and -COOH. Yet, those end-groups may in some processes be converted, partly or totally, into other end-groups by reaction with an end-capping agent. Examples of end-capping agent are monofunctional molecules containing an amine or a carboxylic acid such as acetic acid, benzoic acid, propionic acid.

In the experimental section, Mn was followed by Size Exclusion Chromatography (SEC).

### Optional pretreatment of product (P)

Product (P) may be pretreated prior to step a). The pretreatment step may include a mechanical or physical modification of product, such as cutting, crushing, grinding or fractionation.

### Step a)

In step a), product (P) is put into contact with a compound (A*) in order to reduce the molecular weight of the polyamide (PA).

Step a) is performed in the molten form. Step a) may be performed in any melt-mixing apparatus designed to mix polymers in the molten form.

Step a) may be performed in a kneader such as a Banbury mixer, in a static mixer such as the SMX static mixer commercialized by Sulzer or in an extruder. Step a) is preferably performed in an extruder, notably a single-screw extruder or a twinscrew extruder.

The compound (A*) is selected in the group of C₂-C₁₈ carboxylic acids.

Compound (A*) may more particularly be selected in the group of the C₂-C₁₈ monocarboxylic acids, C₂-C₁₈ dicarboxylic acids and the combination of two or more of said acids.

Compound (A*) may more particularly be selected in the group consisting of carboxylic acids of formula CH₃-(CH₂)ₙ-COOH (V), n being an integer between 0 and 16, carboxylic acids of formula HOOC-(CH₂)ₘ-COOH (VI), m being an integer between 0 and 16, isophthalic acid, terephthalic acid and the combination of two or more of said acids.

Compound (A*) may more particularly be adipic acid, sebacic acid, azelaic acid, terephthalic or isophthalic acid.

According to an embodiment, compound (A*) is advantageously the same as the diacid (A) or one of the diacids (A) of polyamide AABB. This embodiment makes it possible to avoid introducing an acid different from the diacid (A) in the stream (S) to be further processed, which makes the step d) of separation and recovery easier to implement.

In step a), the proportion of compound (A*) is usually less than 50.0 wt%, preferably less than 40.0 wt%, this proportion in wt% being expressed as the weight of compound (A*) relative to the total weight of polyamide (PA)+compound (A*). This proportion is typically at least 5.0 wt%, preferably at least 10.0 wt%.

In step a), the number average molecular weight (Mn) of the polyamide (PA) is preferably reduced by a ratio r of at least 20.0%, preferably of at least 40.0%, more preferably at least 60.0%, more preferably at least 75.0%. r is defined as: r = (Mn of polyamide (PA) - Mn at the end of step a))/Mn of polyamide (PA) x 100. Mn can advantageously be determined by size exclusion chromatography (SEC).

Ratio r may be between 20.0% and 100.0%, more particularly between 20.0% and 98.0%, even more particularly between 40.0% and 95% or between 75.0 and 90.0%.

### Step b)

In step b), the mixture obtained at the end of step a) is optionally treated so as to remove from the molten mixture at least one solid material. Step a) makes it possible to reduce the viscosity of the molten mixture which helps manipulate and treat the molten mixture. See the experimental section.

The solid material that can be removed may be one of the polymer additive(s) (Add). For instance, the solid material that can be removed in step b) can be the filler(s) or the elastomer(s).

The solid material that can be removed may also be a product of degradation of the polymer(s) or of the polymer additive(s) which was generated in step a).

### Step c)

In step c), the hydrolysis of the molecules of polyamide(s) present in the mixture obtained at the end of step a) or optional step b), is performed. The molecules of polyamide(s) that are hydrolyzed are notably the molecules of the polyamide(s) initially present in product (P) and the molecules of polyamide(s) resulting from the reaction with compound (A*).

The hydrolysis of the polyamide is dependent on many parameters and is performed in an aqueous medium. Step a) makes it possible to improve the dispersibility of the polyamide(s) in the aqueous medium.

Under option (i), the hydrolysis is an acidic or basic hydrolysis involving respectively at least one acid (Ac) or at least one base (Ba) and performed in an aqueous medium at a pH respectively lower than 6.0 or higher than 8.0.

The acidic hydrolysis is performed at a pH lower than 6.0, preferably lower than 4.0. The acid (Ac) to be used for the acidic hydrolysis is preferably a strong acid with a pKa lower than 2.0. The acid (Ac) may be selected in the group consisting of HCI, H₂SO₄ or a combination of two or more of said acids. The acid (Ac) is preferably HCI.

The basic hydrolysis is performed at a pH higher than 8.0, preferably higher than 9.0. The base (Ba) to be used for the basic hydrolysis is preferably a strong base with a pKa higher than 8.0. The base (Ba) may be selected in the group consisting of NaOH, KOH or a combination of two or more of said bases. The base (Ba) is preferably NaOH.

Step c) under option i) may be performed at a temperature which is between 20°C and 150°C. This temperature is preferably between 100°C and 150°C.

Under option (ii), the hydrolysis is an enzymatic hydrolysis. This type of hydrolysis is performed in the presence of at least one enzyme.

The enzyme is suitable to break the -NH-CO- bond of the polyamide(s). The enzyme may be an amidase, such as an aryl-acylamidase. The enzyme can for instance be one of the enzymes disclosed in US 6,214,592 of Rhone Poulenc Fibres et polymeres SA, notably with the sequence provided in said US patent.

Step c) under option ii) is preferably performed at a temperature which is not detrimental for the activity of the enzyme(s).

Step c) may advantageously be performed with a limited amount of water. Step c) is advantageously performed with a weight ratio water used in step c) / weight of product (P) lower than 5.0.

Degree of conversion R: the degree of conversion R achieved at the end of step c) is preferably at least 90.0 mol%, preferably at least 95.0 mol%. This ratio corresponds to the degree of conversion of the hydrolysis of the polyamide (PA). The degree of conversion is defined as the decrease in the quantity of a reactant divided by the initial quantity thereof (IUPAC definition).

R can be calculated easily by mass conversion by taking into account the weight of polyamide(s) (PA) initially present in product (P) and the amount of polyamide(s) (PA) left at the end of step c). If product (P) comprises more than one polyamide (PA), R is calculated by taking into account the total weight of the polyamide(s) (PA).

With the method of the present invention, it is possible to reach a R of at least 90.0 mol%, or even at least 95.0 mol%, for a duration of step c) of less than 9.0 hours, preferably less than 8.0 hours.

### Step d)

In step d), a stream (S) comprising the diacid (A), the diamine (B) and compound (A*), each of these three compounds being either in their free form or in the form of a salt, is recovered at the end of step c) and is further processed in order to separate and recover the diacid (A), the diamine (B) and compound (A*).

Depending on the conditions of the hydrolysis step c), the diacid (A) and compound (A*) on the one hand and the diamine (B) on the other hand may be in their free form (respectively acid form or base form) or in the form of a salt.

Thus, if the hydrolysis is an acidic hydrolysis, stream (S) comprises the diacid (A), the diamine (B) in the form of a salt, notably in the form of a salt with the acid (Ac), and compound (A*). Likewise, if the hydrolysis is a basic hydrolysis, stream (S) comprises a salt of the diacid (A) with the base (Ba), the diamine (B) and a salt of compound (A*) with the base (Ba).

Further processing of the stream (S) is conveniently based on crystallization and distillation steps. Different methods combining the crystallization and separation steps are available to further process stream (S).

As an example, with an acidic hydrolysis, the diacid (A), the compound (A*) and the salt of the diamine (B) are separated. The salt of diamine (B) having been separated is neutralised with an inorganic base of formula XOH, X being Li, Na, K or a combination of two or more of these cations to release the diamine (B). XOH is preferably NaOH. The separation may conveniently be performed by crystallisation. Crystallisation is a separation technique that makes use of differences in solubility of the components that are present in the aqueous medium. For instance, in the case of PA 66, a substantial part of the diacid (A) (adipic acid) can crystallise at ambient temperature while the salt of the diamine (B) (hexamethylene diamine) can be left in the aqueous medium. If the aqueous medium is cooled below ambient temperature, more adipic acid crystallizes which helps increase the yield of recovery of the adipic acid. After neutralisation with the inorganic base XOH, the diamine (B) is released and can be recovered, for instance by distillation.

The compounds recovered can be further purified to the level of purity requested by the application.

Optionally, recovered compound (A*) may also be recycled to be used again in step a).

### Examples

### Example 1: polyamide 66 with A*= adipic acid

Step a) is performed with DSM microcompounder with the following conditions: 13.5g of a recycled virgin polyamide 66 are mixed with 1.5g of adipic acid (corresponding to approx. to a proportion of compound (A*) of 10.0 wt%) and the microcompounder is run at 285°C and at 100 rpm for 3 minutes. The mixture obtained at the end of step a) is characterized SEC and shows a reduction of the Mn.

Step a) is performed again with two other proportions of adipic acid: 20 and 30% wt.: see Table 1.

**Table I**

| **Ex.** | **proportion of (A*)** | **Mn by SEC (g/mol)** | **Ratio r** | **viscosity (Pa.s @ 50Hz)** |
|---|---|---|---|---|
| CE1-1 | 0 | 10,100 | / | 120 @ 275°C |
| Ex1-2 | 10.0% | 2,000 | 80% | 0.16 @ 275°C |
| Ex1-3 | 20.0% | 1,000 | 90% | 0.10 @ 250°C |
| Ex1-4 | 30.0% | 950 | 91% | 0.60 @ 215°C |

The melt viscosities of the polyamide PA66 and the products after step a) were measured using an ARES rheometer (for the starting PA66) or coquette module (for the products of Ex1-2, 1-3 and 1-4). As can be seen, the viscosities of the products of Ex1-2, 1-3 and 1-4 are well reduced. Such a low viscosity in the molten form helps in the subsequent steps of the method of the invention.

The three products of Ex1-2, 1-3 and 1-4 show an improved water dispersibility in ionized water in comparison to the polyamide PA66. The granules dislocate when in contact with water and the particles stay longer in suspension when the dispersion is shaken.

### Example 2: polyamide 66 with A*= terephtalic acid

Step a) is performed with DSM microcompounder with the following conditions: 9.1g of a polyamide 66 are mixed with 3.9g of terephthalic acid (proportion = 30 wt%) and the microcompounder is run at 280°C and at 100 rpm for 3 minutes.

A molecular weight reduction from Mn=10,100 g/mol to Mn= 1,090 g/mol is measured by SEC using a Light scattering detector (r=89% reduction).

### Example 3: polyamide 66 with A*= sebacid acid

Step a) is performed with the DSM microcompounder with the following conditions: 9.1g of a polyamide 66 are mixed with 3.9 g of sebacic acid (proportion 30 wt%) and the microcompounder is run at 280°C and at 100 rpm for 3 minutes.

A molecular weight reduction from Mn=10,100 g/mol to Mn= 2,870 g/mol is measured by SEC using a Light scattering detector (r=72% reduction).

### Example 4: acidic hydrolysis of the product of Ex 1-6 obtained at the end of step b)

A 300ml glass reactor equipped with a reflux condenser and a mechanical stirrer is loaded with 30g of the solid flakes recovered from Ex 1-4 (0.186 mol of amide bond) and hydrochloric acid 37% wt. solution. The reaction mixture is immersed in an oil bath at 120°C and kept at reflux for 24 hours.

The solid flakes are easily dispersed in the solution of hydrochloric acid.

### Example 5: polyamide 66 and polyamide 66/glass fibers with A*= adipic acid

Ex. 5-1: step a) was performed with DSM microcompounder with the following conditions: 13.5g of a PA66 (Radipol^{®} A45 from Radici Group with Mn=25,400 g/mol) are mixed with 1.0g of adipic acid and the microcompounder is run at 290°C and at 200 rpm for 3 minutes (Ex 5-1). The mixture obtained at the end of step a) was characterized by SEC and showed a reduction of the average Mn. See Table II.

Ex. 5-2: a compound made of PA66 (Radipol^{®} A45 from Radici Group with Mn=25,400 g/mol) and 56 wt% of chopped glass fiber was prepared by twin screw extrusion. Step a) was performed with the compound: 13.5 g of the compound was mixed with 0.4 g of adipic acid and the microcompounder was run at 290°C and at 200 rpm for 3 minutes. The mixture obtained at the end of step a) was characterized by SEC and shows similarly a reduction of the average Mn. See Table II.

**Table II**

| **Ex.** | **Proportion of (A^{∗})** | **Mn (g/mol)** | **ratio r** |
|---|---|---|---|
| **Ex5-1** | 6.9% | 9,800 | 61% |
| **Ex5-2** | 6.3% | 8,400 | 67% |

## Claims

1. Method of recovery of the monomers from a polyamide (PA) of the AABB type comprises the following steps:
- a) a product (P) comprising a polymer component comprising the polyamide (PA) is put into contact with a compound (A*) in order to reduce the molecular weight of the polyamide (PA), wherein the polymer component is in the molten form and the compound (A*) is selected in the group of C₂-C₁₈ carboxylic acids;
- b) the mixture obtained at the end of step a) is optionally treated so as to remove from the molten mixture at least one solid material;
- c) the hydrolysis of the molecules of polyamide(s) present in the mixture obtained at the end of step a) or optional step b), is performed in an aqueous medium either (i) by an acidic or basic hydrolysis involving an acid (Ac) or a base (Ba) and performed at a pH respectively lower than 6.0 or higher than 8.0 or (ii) by an enzymatic hydrolysis;
- d) a stream (S) comprising the diacid (A), the diamine (B) and compound (A*), each of these three compounds being either in their free form or in the form of a salt, is recovered at the end of step c) and is further processed in order to separate and recover the diacid (A), the diamine (B) and compound (A*).

2. Method according to claim 1, wherein the polyamide (PA) is prepared by polycondensation of:
- at least one diacid (A) selected in the group of C₂-C₁₈ aliphatic diacids, isophthalic acid and terephthalic acid; and
- at least one diamine (B) selected in the group consisting of C₂-C₁₈ aliphatic diamines, C₄-C₁₈ cycloaliphatic diamines and C₈-C₁₈ arylaliphatic diamines.

3. Method according to claim 1 or 2 wherein the polyamide (PA) is selected in the group consisting of polyamide 6.6, polyamide 6.9, polyamide 6.10, polyamide 6.12, polyamide 10.10, polyamide 4.6, polyamide 4.9, polyamide 4.10, polyamide 12.12, polyamide 10.12, polyamide MXD6, polyamide MXD6/PXD6, polyamide MXD6/MXDI, polyamide 6T/66, polyamide 6T/6I/66, PA 6T/6I and mixtures thereof.

4. Method according to any one of claims 1-3, wherein product (P) further comprises at least one polymer additive (Add), notably selected in the group consisting of fillers, colorants, dyes, pigments, lubricants, plasticizers, flame retardants, nucleating agents, heat stabilizers, UV stabilizers, elastomers, core-shell particles, adhesives, antioxidants and processing aids.

5. Method according to any one of the preceding claims, wherein the proportion of polyamide (PA) in product (P) is at least 30.0 wt.%, more particularly at least 40.0 wt.%.

6. Method according to any one of the preceding claims, wherein step a) is performed in an extruder.

7. Method according to any one of the preceding claims, wherein compound (A*) is selected in the group of the C₂-C₁₈ monocarboxylic acids, C₂-C₁₈ dicarboxylic acids and the combination of two or more of said acids.

8. Method according to any one of the preceding claims, wherein compound (A*) is selected in the group of carboxylic acids of formula CH₃-(CH₂)ₙ-COOH (V), n being an integer between 0 and 16, carboxylic acids of formula HOOC-(CH₂)ₘ-COOH (VI), m being an integer between 0 and 16, isophthalic acid, terephthalic acid and the combination of two or more of said acids.

9. Method according to any one of the preceding claims, wherein compound (A*) is the same as the diacid (A) or one of the diacids (A) of polyamide AABB.

10. Method according to any one of the preceding claims, wherein the proportion of compound (A*) is less than 50.0 wt%, preferably less than 40.0 wt%, this proportion in wt% being expressed as the weight of compound (A*) relative to the total weight of polyamide (PA)+compound (A*).

11. Method according to any one of the preceding claims, wherein the proportion of compound (A*) is at least 5.0 wt%, preferably at least 10.0 wt%, this proportion in wt% being expressed as the weight of compound (A*) relative to the total weight of polyamide (PA)+compound (A*).

12. Method according to any one of the preceding claims, wherein the number average molecular weight (Mn) of the polyamide (PA) is preferably reduced by a ratio r of at least 20.0%, preferably of at least 40.0%, more preferably at least 60.0%, more preferably at least 75.0%, r being defined as: r = (Mn of polyamide (PA) - Mn at the end of step a))/Mn of polyamide (PA)) x 100.

13. Method according to any one of the preceding claims, wherein the degree of conversion R of polyamide (PA) achieved at the end of step c) is preferably at least 90.0 mol%, preferably at least 95.0 mol%.

14. Method according to any one of the preceding claims, wherein step c) is an acidic hydrolysis.

15. Method according to claim 14, wherein step c) is an acidic hydrolysis involving HCI as an acid.

16. Method according to any one of the preceding claims, wherein step c) is performed with a weight ratio water used in step c) / weight of product (P) lower than 5.0.

17. Method according to any one of the preceding claims, wherein further processing of the stream (S) is based on crystallization and distillation steps.
